Europäisches Patentamt

European Patent Office

Office européen des brevets

(11) Publication number: **0 099 712**
**B1**

## (12) EUROPEAN PATENT SPECIFICATION

(45) Date of publication of patent specification: **14.09.88**

(21) Application number: **83304006.6**

(22) Date of filing: **08.07.83**

(51) Int. Cl.⁴: **G 01 F 1/26, G 01 F 15/06,**
**G 01 F 15/075 // G01F1/24**

(54) Flowmeters.

(30) Priority: **15.07.82 GB 8220524**

(43) Date of publication of application:
**01.02.84 Bulletin 84/05**

(45) Publication of the grant of the patent:
**14.09.88 Bulletin 88/37**

(84) Designated Contracting States:
**AT BE CH DE FR IT LI LU NL SE**

(56) References cited:
**DE-A-2 815 664**
**DE-C- 664 606**
**FR-A-2 155 303**
**GB-A-2 090 419**
**US-A-3 354 716**
**US-A-3 745 827**
**US-A-4 206 643**

**TECHNISCHES MESSEN, vol. 49, no. 4, April
1982, pages 137-140, Oldenbourg Verlag,
Munich, DE; F. ARNOLDS et al.:
"Schwebekörper-Durchflussmesser mit
Mikrocomputer"**

(73) Proprietor: **JCT CONTROLS LIMITED**
**Brooke Road Wimborne**
**Dorset BH21 2BH (GB)**

(73) Proprietor: **HAYDEN NILOS CONFLOW LIMITED**
**Darnall Road**
**Sheffield S9 (GB)**

(72) Inventor: **Conduit, Christopher Simon**
**39 Merley Ways**
**Wimborne Dorset BH21 1QN (GB)**

(74) Representative: **Hulse, Thomas Arnold**
**Hulse & Co. Cavendish Buildings West Street**
**Sheffield S1 1ZZ (GB)**

(56) References cited:
**MICROELECTRONICS JOURNAL, vol. 12, no. 6,
November/December 1981, pages 24-29,
Mackintosh Publications Ltd., Luton, GB; G.S.
RANDHAWA: "Monolithic integrated Hall
devices in silicon circuits"**

Courier Press, Leamington Spa, England.

## Description

This invention relates to flowmeters of the type comprising a body, an inlet leading to the smaller end of a tapered passage in the body leading towards an outlet, an annular seating at the smaller end of the tapered passage and facing towards the larger end of the tapered passage, a circular valve member, a spring urging the valve member towards contact with the seating, a plunger coaxial with the valve member and slidable in a bore in the body, a bar magnet in a bore in the plunger, and indicator means including a detector responsive to the position of the magnet to produce an analogue output dependent on the displacement of the plunger, and a display unit, the indicator means giving a reading of the rate of flow of fluid through the tapered passage.

The bar magnet enables there to be no mechanical link between the plunger and the indicator means, so that this type of flowmeter is particularly suitable for high pressure fluids. It is therefore known for the magnet in the plunger to be adapted to move a pointer over a scale. Such a flowmeter is described in GB—PS 2 090 419A in which the bar magnet is axially adjustable in the plunger for adjustment of the zero position of the pointer, which is rotatable on an axis perpendicular to the axis of the plunger and laterally offset therefrom and is secured to a circular magnet having diametrically opposed poles, whereby the scale may be marked out over 180° or a substantial part thereof.

Flowmeters of the type just described are robust and rapid-acting. Also, by choice of the shape of the tapered flow passage and/or by variation of the rate of the spring acting on the plunger, the output reading may be related to the flow linearly or otherwise. It may for example be arranged that the readings at low flows are exaggerated so as to give a more accurate indication of such flows. However, with any type of characteristic, the relationship between each flowrate and the corresponding output will be subject to manufacturing variations. Therefore, even with the limited degree of correction provided by axial adjustment of the magnet, it is normally necessary to calibrate flowmeters of the type described by graduation of the scale of each instrument individually, which is most laborious.

One object of the invention is to provide a flowmeter capable of rapid and accurate calibration.

Another object is to provide a flowmeter giving a digital readout.

A further object is to provide a flowmeter also capable of being adapted to give a display of rate of flow and temperature and/or pressure.

Yet another object is to provide a flowmeter with a remote display or recording equipment.

A still further object is to provide a flowmeter also capable of being adapted to give a digital display of total flow within a period or from a specific time.

According to the present invention, a flowmeter of the type initially described is characterised in that the detector comprises a Hall-effect integrated circuit and in that there is provided an analogue/digital converter to which the analogue output is fed, a linearizer receiving the output of said analogue/digital converter and having a read-only memory (ROM) programmed to compensate for non-linearities in the flow responsive displacement characteristics of the plunger reproduced in the detector output and so produce a linear output accurately related to any rate of flow throughout the range of the flowmeter, and in that the display unit receives the linearizer output.

Use of an integrated Hall-effect device in a flowmeter is already known, as for example in FR—PS 2 155 303, but in such cases the output has been a pulsed one, unsuitable for the input to a linearizer, not an analogue output as employed in this invention.

Similarly, the application of an analogue/digital converter in series with a computer including a ROM to a flowmeter is known, for example in Arnolds et al, Technisches Messen 49 (1982) 4, pp 137—140. However, this known device presents a complicated embodiment and a slow method of measurement of plunger position.

If, as is frequently the case, the signal output of the detector is dependent upon temperature, a signal conditioning amplifier is preferably provided, connected in circuit with a temperature sensing semi-conductor device adjacent the detector, the output of which device is used to alter the gain and offset of the detector output to produce a signal which does not vary significantly with temperature.

The display unit may be attached to the body of the flowmeter (e.g. having a digital display incorporated in place of a pointer and scale, and with a Hall-effect integrated circuit incorporated in place of a circular magnet) and/or the display unit may be remote from the body of the flowmeter. The output from the linearizer may be used to drive an analogue or digital display and/or an interface to enable signals to be transmitted to remote monitoring or recording equipment.

A by-product of measuring the temperature for doing the compensation, by a signal conditioning amplifier, is that an output signal can be obtained of temperature. Alternatively, or in addition, a pressure transducer may be incorporated in the body of the flowmeter so that an output signal can be obtained for pressure.

The ROM of the linearizer requires the analogue signal from the signal conditioning amplifier to be converted to digital form. The digital output of the linearizer is ready for a digital display unit, but it may be converted to an analogue form by means of a digital to analogue converter, which may be boosted by a voltage or current driver, before being fed to an analogue display.

The remote display unit may (in addition to displaying flow, or temperature and/or pressure) process the signals to indicate total flow within a period or from a specific time.

A number of embodiments of the invention will now be described, by way of example only, with reference to the accompanying drawings, in which:

Figure 1 is a perspective view of one embodiment of flowmeter in accordance with the invention, with an integral digital display unit;

Figure 2 is a longitudinal section of the flowmeter of Figure 1;

Figure 3 is a section from the line III—III of Figure 2;

Figure 4 is a perspective view of another embodiment of flowmeter in accordance with the invention, with a remote digital display unit;

Figure 5 is a longitudinal section of the flowmeter of Figure 4;

Figure 6 corresponds to Figure 1 but shows an integral analogue display unit;

Figure 7 corresponds to part of Figure 4 but shows an analogue display in place of one of the digital displays.

Figure 8 is a block circuit diagram for a flowmeter with an integral display unit; and

Figures 9A, 9B are block circuit diagrams for a flowmeter with a remote display unit.

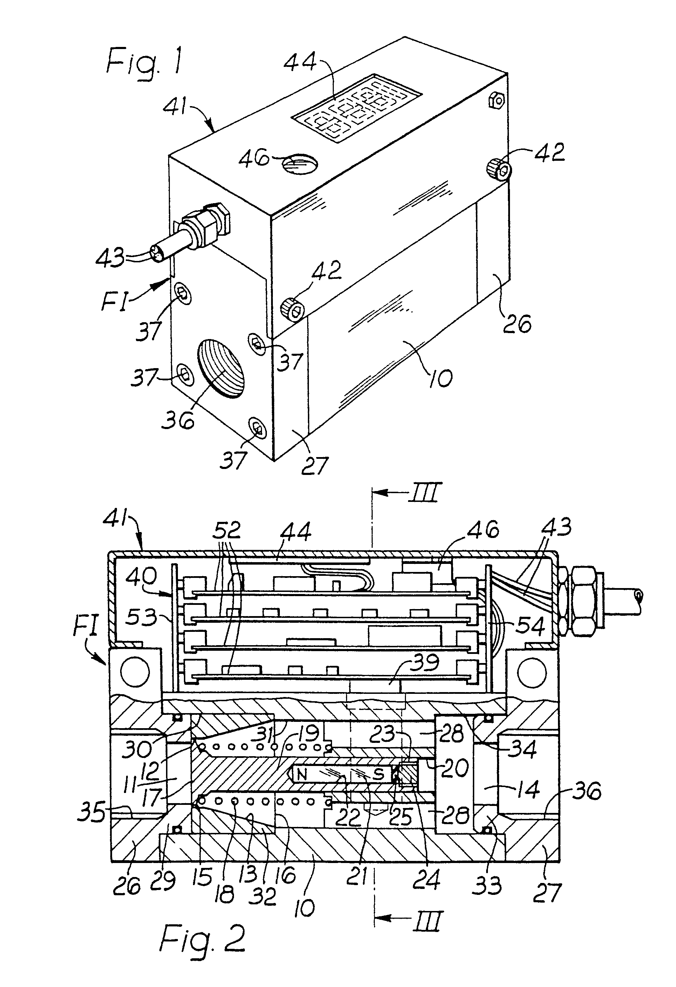

The flowmeter FI shown in Figures 1 to 3 comprises a body 10, an inlet 11 leading to a smaller diameter end 12 of a tapered passage 13 in the body leading towards an outlet 14, an annular seating 15 at the smaller end of the tapered passage and facing towards the larger end 16 of the tapered passage, a circular valve member 17, a spring 18 urging the valve member towards contact with the seating, a plunger 19 coaxial with the valve member and slidable in a bore 20 in the body, a bar magnet 21 housed in a coaxial bore 22 in the plunger, a screwthread 23 in the bore 22, a screw 24 mating with the screwthread and a resilient packing member 25 between the screw and the adjacent end of the magnet.

The inlet 11 and the outlet 14 are coaxial with the valve member 17 and plunger 19 and are provided in respective end caps 26, 27 bolted to respective ends of the body 10, with longitudinal (non-axial) bores 28 through the body communicating the larger end 16 of the tapered passage 13 with the outlet 14. The inlet end cap 26 has a tubular spigot 29 sealed in an enlargement 30 of a counterbore 31 of the axial bore 20 in which the plunger 19 slides, the enlargement 30 of the counterbore 31 also housing a cylindrical insert 32 in which is provided the tapered passage 13, which insert 32 is interchangeable. The spigot 29 of the inlet end cap 26 also provides the seating 15 round the inlet 11. The outlet end cap 27 has a tubular spigot 33 sealed in a chamber 34 in the body 10 into which the longitudinal (non-axial) bores 28 discharge and which is also a counterbore of the axial bore 20 in which the plunger slides. The end caps 26, 27 are provided with screwthreaded counterbores 35, 36 to enable the flowmeter to be connected in a pipeline (not shown) and are secured to the body 10 by screws 37.

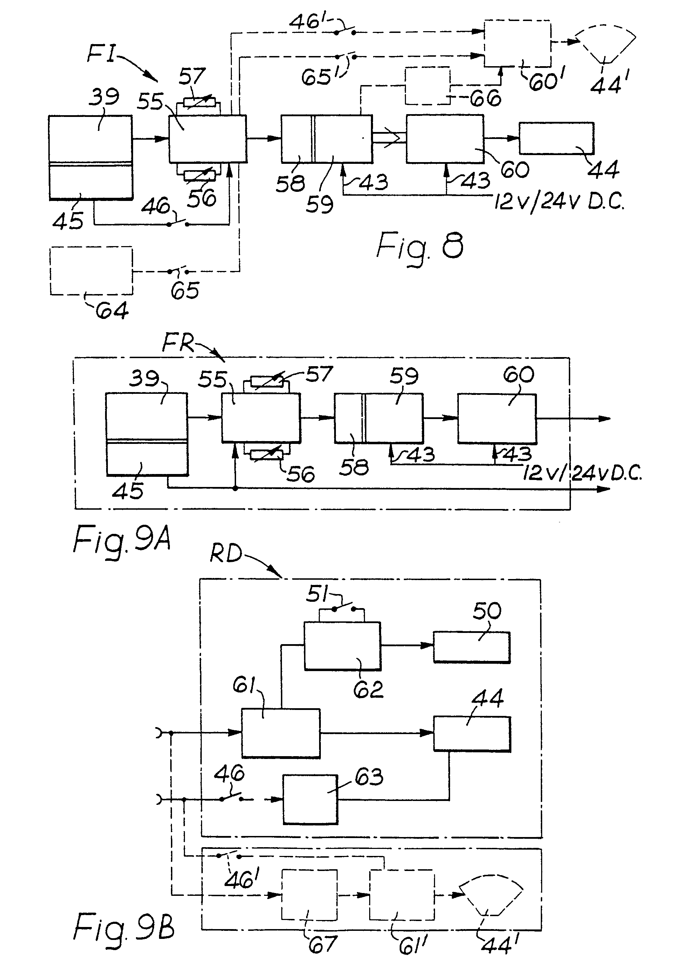

The body 10 also has a blind bore 38 housing a detector 39 consisting of a Hall-effect integrated circuit (hereinafter referred to as "the magnetic detector 39"), which produces a signal related to the position of the magnetic field of the bar magnet 21 and, therefore, related to the position of the plunger 19 and proportional to the displacement of the plunger. The signal from the magnetic detector 39 is fed to an electronic module 40 within a display unit 41 attached to the body 10 of the flowmeter FI by means of screws 42. The module 40 has leads 43 from a 12V/24V D.C. power supply (not shown) and is connected to a liquid crystal display (LCD) 44 having a four-digit display capable of registering from 0 to 1999 relative to rate of flow through the flowmeter. The block circuit diagram is shown in Figure 8 and will be described presently. Encapsulated with the detector 39 is a temperature sensing semi-conductor device 45, and a button switch 46 enables the display 44 to be switched from rate of flow to temperature for as long as the button is depressed.

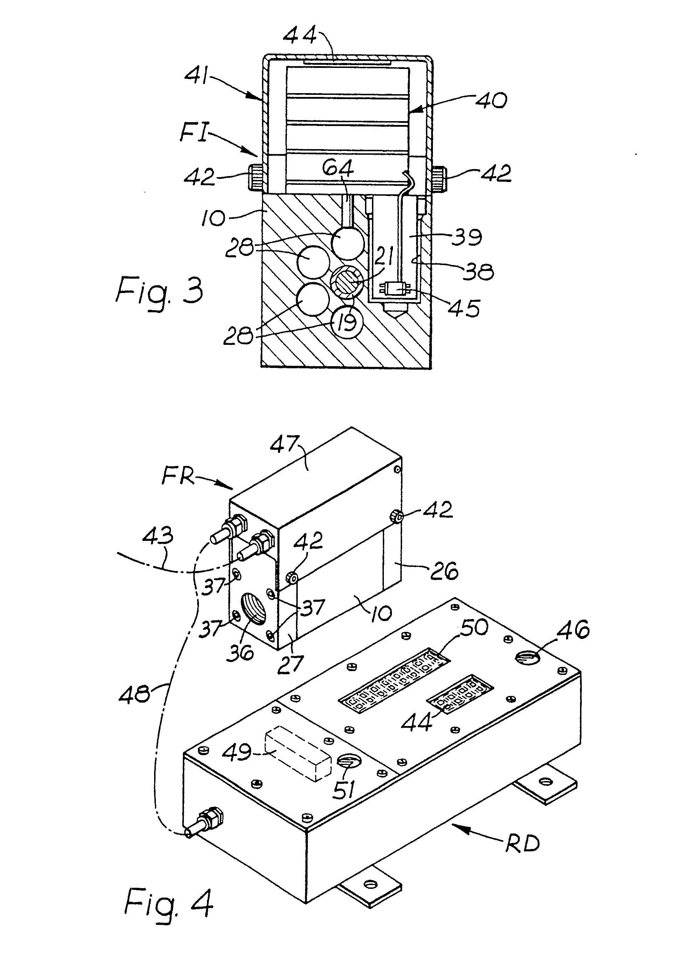

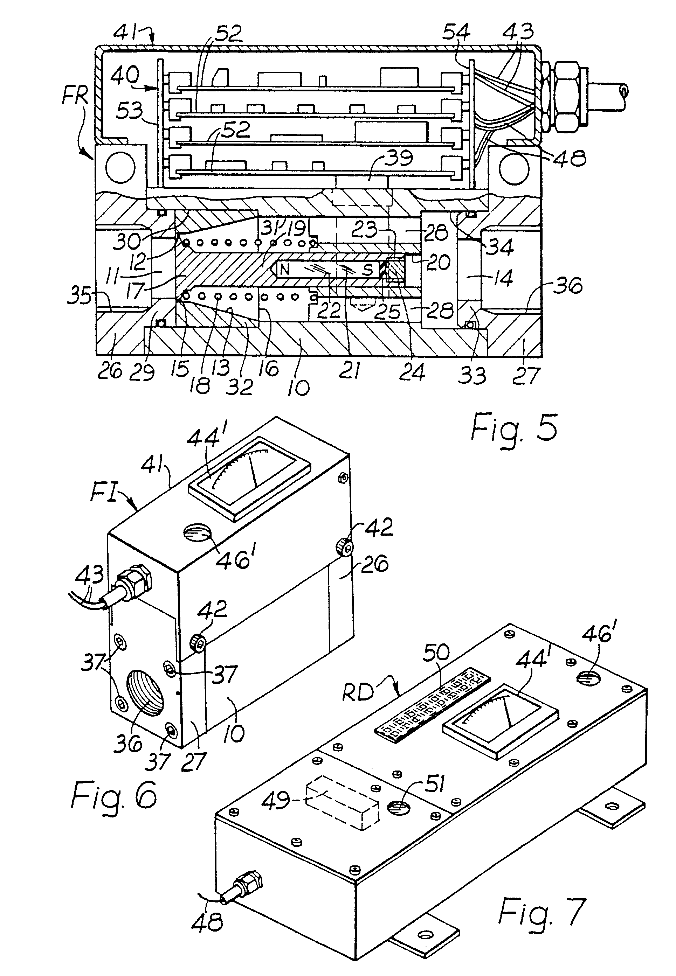

In Figures 4 and 5 like reference numerals represent like parts to those in Figures 1 to 3, but the flowmeter FR in Figures 4 and 5 has a remote display unit RD and the electronic module 40 is housed in a simple casing 47 attached to the body 10 of the flowmeter FR by means of screws 42. In addition to the leads 43 from a 12V/24V D.C. power source (not shown) there are leads 48 to a terminal block 49 in the remote display unit RD, from which terminal block leads (not shown) connect with a four-digit liquid crystal display 44 and button switch 46 (serving as in the integral display unit 41), and also with an eight-digit liquid crystal display 50 for indicating total flow (within a period or from a specific time) and a button switch 51 for re-setting the display 50 to zero.

In Figures 6 and 7 an analogue display 44' is shown in place of the digital display 44 in the integral display unit 41 and in the remote display unit RD respectively.

The electronic module 40 consists of four printed circuit boards 52 carrying various electronic components and their interconnections, and the printed circuit boards are interconnected by bus-bars 53 and 54, but the circuit diagrams for the flowmeters FI and FR (with remote display unit RD) are shown as block diagrams in Figure and Figures 9A, 9B respectively.

In Figures 8 and 9A the signal from the magnetic detector 39 is fed to a signal conditioning amplifier 55 connected in circuit with the temperature detector 45 and having zero and span controls 56, 57 respectively. The conditioned signal is fed through an analogue/digital converter 58 to a linearizer 59 having a read-only memory (ROM) programmed to compensate for non-linearities in the flow responsive displacement characteristics of the plunger 19 reproduced in the magnetic detector output and so produce a linear output, which is fed through an output module 60, either directly to the digital display 44 of the integral display unit 41 of the flowmeter FI as shown in Figure 8, or to the remote display unit RD which, as shown in Figure 9B, has an input amplifier 61 with outputs to the four-digit display 44 and to the eight-digit display 50 through a totaliser 62 having the reset switch 51. In Figure 8 the selector switch 46 enables a signal from the temperature detector 45 to be temporarily directed through the output module 60 in the flowmeter FI with integral display unit 41 to show the temperature momentarily on the four-digit display 44, which otherwise shows continuously the rate of flow, while in Figure 9B the selector switch 46 enables the signal from the temperature detector 45 to be temporarily directed through an analogue/digital converter 63 of the remote display unit RD for the flowmeter FR, again to show the temperature momentarily on the four-digit display 44.

Figure 8 also indicates the inclusion of an optional pressure transducer 64 (the position of which is indicated in Figure 3) with a selector switch 65 enabling a signal from the pressure transducer to be temporarily directed through the output module 60 in the flowmeter FI with integral display unit to show the pressure momentarily on the four-digit display 44. Furthermore, Figure 8 also indicates the possible alternative, or addition, of an analogue display 44' (see also Figure 6) having an output module 60' receiving the output from the linearizer 59 through a digital/analogue converter 66 and also receiving temporarily a signal from the temperature sensor 45 or the pressure transducer 64 upon temporarily depressing the switch 46' or the switch 65'.

Figure 9B likewise indicates the possible alternative, or addition, of an analogue display 44' (see also Figure 7) having an input amplifier, 61', receiving the output from the output module 60 of Figure 9A through a digital/analogue converter 67 and also receiving temporarily a signal from the temperature sensor 45 upon temporarily depressing the switch 46'. A pressure transducer is not indicated in Figure 9A but could be incorporated in similar manner to that shown in Figure 8 and with appropriate connections and switches in Figure 9B.

## Claims

1. A flowmeter (FI or FR) comprising a body (10), an inlet (11) leading to the smaller end (12) of a tapered passage (13) in the body leading towards an outlet (14), an annular seating (15) at the smaller end of the tapered passage and facing towards the larger end (16) of the tapered passage, a circular valve member (17), a spring (18) urging the valve member towards contact with the seating (15), a plunger (19) coaxial with the valve member (17) and slidable in a bore (20) in the body (1), a bar magnet (21) in a bore (22) in the plunger (19), and indicator means (39, 41, 44' or RD) including a detector (39) responsive to the position of the magnet (21) to produce an analogue output dependent on the displacement of the plunger (19), and a display unit (41, 44' or RD), the indicator means (39, 41, 44' or RD) giving a reading of the rate of flow through the tapered passage (13), characterized in that the detector (39) comprises a Hall-effect integrated circuit and in that there is provided an analogue/digital converter (58) to which the analogue output of the detector (39) is fed, a linearizer (59) receiving the output of said analogue/digital converter (58) and having a read-only memory (ROM) programmed to compensate for non-linearities in the flow responsive displacement characteristics of the plunger (19) reproduced in the detector output and so produce a linear output accurately related to any rate of flow throughout the range of the flowmeter, and in that the display unit (41, 44' or RD) receives the linearizer output.

2. A flowmeter as in Claim 1, characterised in that the display unit (41) has a digital display (44).

3. A flowmeter as in Claim 1 or Claim 2, characterised in that a signal conditioning amplifier (55) is provided, which is connected in circuit with a temperature sensing semi-conductor device (45) adjacent the detector (39), the output of which device can be used to alter the gain and offset of the detector output to produce a signal which does not vary significantly with temperature.

4. A flowmeter as in any one of Claims 1 to 3, characterised in that the display unit (41) is attached to the body (10) of the flowmeter (FI).

5. A flowmeter as in any one of Claims 1 to 3, characterised in that the display unit (RD) is remote from the body (10) of the flowmeter (FR).

6. A flowmeter as in Claim 1, characterised in that the display unit (41 or RD) has an analogue display (44').

7. A flowmeter as in Claim 3, characterised in that a switch (46) is provided for temporarily directing the signal from the temperature detector (45) to the display unit (41 or RD).

8. A flowmeter as in any one of Claims 1 to 7, characterised in that a pressure transducer (64) is incorporated in the body of the flowmeter so that an output signal can be obtained for pressure.

9. A flowmeter as in Claim 5, characterised in that the remote display unit (RD) is provided with a totalizer (63) with a digital display (50) to indicate total flow within a period or from a specific time.

## Patentansprüche

1. Durchflußmesser, bestehend aus einem Gehäuse, einem zum engeren Ende eines zu einem Auslaß führenden konischen Durchlasses im Gehäuse führenden Einlaß, einem zum engeren Ende des konischen Durchlasses hinweisenden kreisringförmigen Sitz, einem kreisrunden Ventilteller, einer den Ventilteller auf den Sitz pressenden Feder, einem mit dem Ventilteller koaxialen und in einer Gehäusebohrung verschieblichen Kolben, einem Stabmagnet in einer Kolbenbohrung und einer Anzeigeeinrichtung mit einem auf die Stellung des Magneten ansprechenden Detektor zur Erzeugung eines von der Verschiebung des Kolbens abhängigen analogen Ausganges und einem Anzeigegerät, wobei die Anzeigeeinrichtung die Durchflußmenge durch den konischen Durchlaß anzeigt, dadurch gekennzeichnet, daß der Detektor (39) aus einer integrierten Hall-Effekt-Schaltung besteht und daß ein A-D-Wandlier (58) vorgesehen ist, dem der analoge Ausgang des Detektors eingespeist wird, wobei eine Linearisierungsschaltung (59) den Ausgang des A-D-Wandlers empfängt und einen Festwertspeicher (ROM) besitzt, welcher programmiert ist, um Nichtlinearitäten in den auf den Durchfluß ansprechenden Verschiebungsmerkmalen des Kolbens, die im Detektorausgang wiedergegeben werden, zu kompensieren und somit eine genau auf jede beliebige Durchflußmenge über den Meßbereich des Durchflußmessers bezogenen linearen Ausgabe zu erzeugen, und dadurch, daß das Anzeigegerät (41, 44 oder RD) die Ausgabe der Linearisierungsschaltung empfängt.

2. Durchflußmesser nach Anspruch 1, dadurch gekennzeichnet, daß das Anzeigegerät (41) eine Digitalanzeige (44) besitzt.

3. Durchflußmesser nach Anspruch 1 oder 2, dadurch gekennzeichnet, daß ein Signalverarbeitungsverstärker (55) vorgesehen ist, welcher an eine temperaturempfindliche Einrichtung (45) neben dem Detektor (39) angeschlossen ist, wobei die Ausgabe dieser Einrichtung ausgenutzt werden kann, um die Verstärkung und Versetzung des Detektorausganges zu verändern und ein Signal zu liefern, welches mit der Temperatur nicht wesentlich schwankt.

4. Durchflußmesser nach irgendeinem der Ansprüche 1 bis 3, dadurch gekennzeichnet, daß das Anzeigegerät (41) auf dem Gehäuse (10) des Durchflußmessers (FJ) befestigt ist.

5. Durchflußmesser nach irgendeinem der Ansprüche 1 bis 3, dadurch gekennzeichnet, daß das Anzeigegerät (RD) vom Gehäuse (10) des Durchflußmessers (FR) entfernt angeordnet ist.

6. Durchflußmesser nach Anspruch 1, dadurch gekennzeichnet, daß das Anzeigegerät (41 oder RD) ein Analogsichtgerät (44') ist.

7. Durchflußmesser nach Anspruch 3, dadurch gekennzeichnet, daß ein Schalter (46) vorgesehen ist, um das Signal vom Temperaturfühler (45) kurzzeitig dem Anzeigegerät (41 oder RD) zuzuleiten.

8. Durchflußmesser nach irgendeinem der Ansprüche 1 bis 7, dadurch gekennzeichnet, daß im Gehäuse des Durchflußmessers ein Druckübertrager (64) eingebaut ist, sodaß ein Ausgangssignal für den Druck erzielbar ist.

9. Durchflußmesser nach Anspruch 5, dadurch gekennzeichnet, daß das entfernt angeordnete Anzeigegerät (RD) mit einem Summenwerk (62) mit einer Digitalanzeige (50) versehen ist, um den Gesamtdurchfluß innerhalb einer Zeitspanne oder von einer bestimmten Zeit an anzuzeigen.

**Revendications**

1. Débitmètre (FI ou FR) comprenant un corps (10), un orifice d'entrée (11) menant à la plus petite extrémité (12) d'un passage conique (13) qui est pratiqué dans le corps et mène à un orifice de sortie (14), un siège annulaire (15) à la plus petite extrémité du passage conique et tourné vers la plus grande extrémité (16) du passage conique, un obturateur circulaire (17), un ressort (18) poussant l'obturateur (17) en contact avec le siège (15), un plongeur (19) coaxial avec l'obturateur (17) et pouvant coulisser dans un alésage (20) pratiqué dans le corps (1), un barreau aimanté (21) disposé dans un alésage (22) pratiqué dans le plongeur (19), et un moyen indicateur (39, 41, 44' ou RD) comprenant un détecteur (39) réagissant à la position de l'aimant (21) pour produire une sortie analogique fonction du déplacement du plongeur (19), et une unité d'affichage (41, 44' ou RD), le moyen indicateur (39, 41, 44' ou RD) fournissant une lecture du débit de fluide à travers le passage conique (13), caractérisé en ce que le détecteur (39) comprend un circuit intégré à effet Hall, en ce qu'il est prévu un convertisseur analogique-numérique (58) auquel est fournie la sortie analogique du détecteur (39), un linéariseur (59) recevant la sortie dudit convertisseur analogique-numérique (58) et possédant une mémoire morte (ROM) programmée pour compenser les défauts de linéarité dans la courbe caractéristique du déplacement du plongeur (19), fonction du débit, qui est reproduit dans la sortie du détecteur, et pour produire ainsi une sortie linéaire qui correspond de manière précise à un quelconque débit de fluide sur toute la plage du débitmètre, et en ce que l'unité d'affichage (41, 44' ou RD) reçoit la sortie linéarisée.

2. Débitmètre selon la revendication 1, caractérisé en ce que l'unité d'affichage (41) possède un dispositif d'affichage numérique (44).

3. Débitmètre selon la revendication 1 ou 2, caractérisé en ce qu'il est prévu un amplificateur conditionneur de signal (55), qui est relié en circuit avec un dispositif semiconducteur détecteur de température (45) voisin du détecteur (39), la sortie de ce dispositif pouvant être utilisée pour modifier le gain et le décalage de la sortie du détecteur afin de produire un signal qui ne varie pas d'une manière significative avec la température.

4. Débitmètre selon l'une quelconque des revendications 1 à 3, caractérisé en ce que l'unité d'affichage (41) est fixée sur le corps (10) du débitmètre (FI).

5. Débitmètre selon l'une quelconque des revendications 1 à 3, caractérisé en ce que l'unité d'affichage (RD) se trouve à distance du corps (10) du débitmètre (FR).

6. Débitmètre selon la revendication 1, caractérisé en ce que l'unité d'affichage (41 ou RD) possède un dispositif d'affichage analogique (44').

7. Débitmètre selon la revendication 3, caractérisé en ce qu'il est prévu un commutateur (46) pour diriger temporairement le signal du détecteur de température (45) vers l'unité d'affichage (41 ou RD).

8. Débitmètre selon l'une quelconque des revendications 1 à 7, caractérisé en ce qu'un transducteur de pression (64) est incorporé dans le corps du débitmètre, de sorte qu'on peut obtenir un signal de sortie pour la pression.

9. Débitmètre selon la revendication 5, caractérisé en ce que l'unité d'affichage à distance (RD) est munie d'un totalisateur (63) à affichage numérique (50) pour indiquer le flux total pendant une période donnée ou à partir d'un instant donné.

Fig. 1

Fig. 2

1

Fig. 3

Fig. 4

Fig. 5

Fig. 6

Fig. 7

Fig. 8

Fig. 9A

Fig. 9B